# EUROPEAN PATENT APPLICATION

(11) **EP 0 760 388 A2**
(43) Date of publication of application: **05.03.1997**
(21) Application number: 96304779.0
(22) Date of filing: 28.06.1996
(51) Int. Cl.: C09D 167/00, C09D 5/03

(54) **Polyester resin powder coating compositions**

(30) Priority: 05.08.1995 GB 9516107
(71) Applicant: TIOXIDE SPECIALTIES LIMITED, London W14 0QL (GB)
(72) Inventor: Ridland, John, Durham, County Durham DH1 5GL (GB)
(74) Representative: Jackson, John Derek

(57) **Abstract**

A method of curing polyester resin powder coating composition comprises reacting a polyester resin with an organometallic compound which is an alkoxy aluminium complex of an alkanolamine having a ratio of alkanolamino radicals to aluminium atoms in the range 0.3:1 to 16:1. In a particular embodiment the organometallic compound is a mixed metal complex derived from at least one aluminium alkoxide and at least one titanium alkoxide, the atomic ratio of Al:Ti being in the range 0.3:1 to 2:1. The compositions cure more quickly than known compositions containing titanium or zirconium compounds of alkanolamines and the cured coatings are less prone to yellowing.

## Description

This invention relates to powder coating compositions based on polyester resins and in particular to the use of certain organometallic compounds containing aluminium to cure polyester resin powder coating compositions.

Coating compositions comprising powdered thermo-setting compositions are increasingly used for the formation of highly durable and decorative finishes. Such compositions, usually known as powder coating compositions, are frequently based on polyester resins which can be prepared by the reaction of polyhydric alcohols and polybasic acids and in which the molar ratio of alcohol to acid can be adjusted to produce resins which contain an excess of hydroxyl groups over acid groups (hydroxyl-rich resins) or resins which contain an excess of acid groups over hydroxyl groups (carboxyl-rich resins).

The carboxyl-rich resins are frequently cured by cross-linking with an isocyanurate such as triglycidyl isocyanurate (TGIC) to produce durable coatings ideally suitable for exterior use. However, there is now a desire to reduce the use of triglycidyl isocyanurate.

Cross-linking of carboxyl-rich resins with epoxy resins such as resins based on bisphenol A is known to produce resins which are frequently called hybrid resins. However these resins do not possess the same properties or exterior durability as those produced by cross-linking with triglycidyl isocyanurate.

Coatings having good exterior durability can also be produced by cross-linking hydroxyl-rich resins with isocyanates. These isocyanates may be blocked, for example with caprolactam, to prevent premature reaction with the polyester. However, there is now a general trend within the coating industry to avoid the use of caprolactam-blocked isocyanates when possible.

It is an object of the invention to provide an alternative method for curing polyester resin powder coating compositions which is suitable for hydroxyl-rich and/or carboxyl-rich resins and provides cured coatings with desirable properties.

Our co-pending application GB 9408430.8 discloses a method of curing polyester powder coating compositions using specified organotitanium or organozirconium compounds which are derivatives of a trialkanolamine. A further application GB 9412908.7 describes an improved method in which the organotitanium or organozirconium compounds which are used are derivatives of a trialkanolamine and of a dialkanolamine or a monoalkanolamine.

It has now been surprisingly found that certain alkoxy aluminium complexes of alkanolamines can be used to cure polyester resin powder coating compositions and these aluminium complexes have advantages over the organotitanium or organozirconium compounds of our earlier applications.

Consequently, according to the invention, a method of curing a powder coating composition comprises reacting a polyester resin with an organometallic compound which is an alkoxy aluminium complex of an alkanolamine, said alkoxy aluminium complex having a ratio of alkanolamino radicals to aluminium atoms in the range 0.3:1 to 16:1.

These alkoxy aluminium complexes are more reactive than the known organotitanium or organozirconium compounds. Therefore the cure time is generally shorter. Moreover, the cured coatings produced are less prone to yellowing.

The coatings produced from complexes containing aluminium as the sole metal do, however, have a slightly lower solvent resistance than the coatings produced with the organotitanium or organozirconium compounds. However, it has also been found that the solvent resistance can be improved by using a mixed metal complex of an alkanolamine, based on titanium and aluminium.

Consequently, in a particular embodiment of the invention, hereinafter called the second embodiment of the invention a method of curing a powder coating composition comprises reacting a polyester resin with an organometallic compound which is a mixed metal complex of an alkanolamine, said organometallic compound being derived from at least one aluminium alkoxide and at least one titanium alkoxide and said organometallic compound having a ratio of alkanolamino radicals to the sum of aluminium and titanium atoms in the range 0.5:1 to 4:1 and an atomic ratio of aluminium to titanium of 0.3:1 to 2:1.

Cured powder coatings prepared according to this second embodiment have good yellowing resistance, solvent resistance and curing rate.

The polyester resins which can be used in the method of the invention can be those which are described as hydroxyl-rich or those which are described as carboxyl-rich. They can be prepared from polyols and polybasic carboxylic acids or their esterifiable derivatives by any suitable known process.

Polybasic acids which are useful for their preparation include aromatic, cycloaliphatic or aliphatic carboxylic acids such as terephthalic acid, isophthalic acid, phthalic acid, trimellitic acid, pyromellitic acid, hexahydrophthalic acid, adipic acid and sebacic acid. Esters of these acids with monohydric alcohols, for example dimethyl terephthalate or acid anhydrides such as phthalic anhydride can also be used as reactants for preparing the polyesters in place of the equivalent acid.

Suitable polyhydric alcohols include 1,2-ethanediol (ethylene glycol), 1,2-propanediol, trimethylolpropane, neopentyl glycol, 1,3-butanediol, 1,4-butanediol, pentaerythritol, glycerol, tris(hydroxyethyl)isocyanurate and ethoxylated bisphenol A (2,2-bis[4,4'-hydroxyethoxyphenyl] propane).

Preferably the polyesters are branched and have a high melting point.

The molar ratio of the raw materials used for polyester production is selected so as to ensure an excess of either hydroxyl groups (hydroxyl-rich resins) or carboxyl groups (carboxyl-rich resins) in the finished polyester. Typically, hydroxyl-rich resins which are commercially available have a hydroxyl number between 20 and 150 mg KOH per gram. For the practice of this invention the preferred hydroxyl number is between 20 and 100 mg KOH per gram and more preferably between 20 and 60 mg KOH per gram. Such resins usually have an acid number of from 0 to 15 mg KOH per gram. Typical, commercially available, carboxyl-rich resins which are of use in the method of the invention have an acid number of from 15 to 100 mg KOH per gram and preferably from 15 to 60 mg KOH per gram and a hydroxyl number of less than 30 mg KOH per gram and preferably less than 10 mg KOH per gram.

Resins which are a copolymer of a polyester and another polymer are useful in the practice of the invention and such copolymers include carboxyl-rich and hydroxyl-rich copolymers of polyesters and acrylic polymers.

The aluminium compounds which are of use in the method of the invention are alkoxy aluminium complexes of an alkanolamine. The alkanolamine can be a monoalkanolamine, a dialkanolamine or a trialkanolamine. Preferably the alkanolamine is an ethanolamine or a propanolamine such as monoethanolamine, monoisopropanolamine, diethanolamine, diisopropanolamine, triethanolamine and triisopropanolamine.

The aluminium compounds are alkoxy derivatives of aluminium, that is to say that they contain alkoxy radicals as well as alkanolamino radicals. Usually, the alkoxy radicals are derived from an alcohol of formula ROH in which R is an alkyl radical or a radical containing one or more ether linkages. Preferably, R contains up to 8 carbon atoms and more preferably up to 6 carbon atoms.

The aluminium compounds can be readily prepared by reaction of a chosen alkanolamine with an aluminium alkoxide in an appropriate molar ratio followed by the removal of alcohol which is displaced. For example, reaction of 1 mole of triethanolamine with 1 mole of aluminium triisopropoxide followed by removal of isopropyl alcohol generated produces a compound suitable for use in the method of the invention.

Aluminium alkoxides suitable for preparing the aluminium compounds using the aforementioned method include triisopropoxy aluminium, tri(sec-butoxy)aluminium, tri-n-butoxy aluminium and tris(2-ethoxyethoxy) aluminium.

Other methods can be used to prepare the alkoxyaluminium complexes of alkanolamines.

In the second embodiment of the invention the organometallic compound used is an alkoxy complex of aluminium and of titanium with an alkanolamine. These organometallic compounds are derivatives of a monoalkanolamine, a dialkanolamine or a trialkanolamine and preferred alkanolamines include monoethanolamine, diethanolamine, triethanolamine, monoisopropanolamine, diisopropanolamine and triisopropanolamine.

The compounds can be readily prepared by reaction of a chosen alkanolamine with a mixture of an aluminium alkoxide and a titanium tetraalkoxide in an appropriate molar ratio followed by the removal of the alcohol or alcohols displaced. For example, reaction of 2 moles of triethanolamine with 1 mole of aluminium triisopropoxide mixed with 1 mole of titanium tetraisopropoxide followed by removal of isopropyl alcohol generated produced an organometallic compound eminently suitable for use in the second embodiment of this invention.

The aluminium alkoxides suitable for use in this method of preparation of organometallic compounds according to the second embodiment of the invention are those which have already been described heretofore. Generally the preferred titanium tetraalkoxides for use in this preparative method are also those derived from alcohols having the formula ROH in which R is an alkyl radical or a radical containing one or more ether linkages. Preferably R contains up to 8 carbon atoms and more preferably up to 6 carbon atoms. Suitable titanium tetraalkoxides include tetraisopropoxy titanium, tetraethoxy titanium, tetra-n-butoxy titanium, tetrakis(2-ethylhexoxy) titanium and tetrakis(2-ethoxyethoxy)titanium.

Alternative preparative methods can be employed for these mixed titanium-aluminium compounds. For example, an aluminium complex of an alkanolamine can be prepared as outlined hereinbefore. Separately, an alkoxy titanium complex of an alkanolamine can be prepared by an analogous method and the two alkanolamine complexes can be subsequently mixed under conditions which allow equilibration of the radicals.

Generally, the alkoxy radicals associated with aluminium will be the same as the alkoxy radicals associated with titanium since this will normally simplify any manufacturing operations.

The alkoxy aluminium complexes used in this invention have a ratio of alkanolamino radicals to aluminium atoms in the range 0.3:1 to 16:1. when no titanium is present in the alkoxy complex, the ratio of alkanolamino radicals to aluminium atoms is preferably in the range 0.3:1 to 3:1 and more preferably in the range 0.5:1 to 2:1. In the embodment in which the alkoxy complex is a complex of aluminium and titanium it is convenient to characterise the complex by the ratio of alkanolamino radicals to the sum of aluminium plus titanium atoms. This ratio is from 0.5:1 to 4:1 and preferably 0.5:1 to 2:1.

The organometallic compounds may be based on a mixture of mono-, di- and tri-alkanolamines. When no titanium is present the preferred ratio of trialkanolamino radicals to aluminium atoms is from 0 to 2:1, the preferred ratio of dialkanolamino radicals to aluminium atoms is from 0 to 3:1 and the preferred ratio of monoalkanolamino radicals to aluminium atoms is from 0 to 3:1. When titanium is present the preferred ratio of trialkanolamino radicals to aluminium plus titanium atoms is 0 to 2.5:1, the preferred ratio of dialkanolamino radicals to aluminium plus titanium atoms is 0 to 4:1 and the preferred ratio of monoalkanolamino radicals to aluminium plus titanium atoms is from 0 to 4:1.

When more than one alkanolamino radical is present in the organometallic compound, it is preferred that they are all derivatives of the same hydrocarbon. For example, all the alkanolamines are ethanolamines or all the alkanolamines are isopropanolamines.

In the embodiment using an alkoxy complex of aluminium and titanium the ratio of aluminium atoms to titanium atoms is from 0.3:1 to 2:1 and preferably from 0.3:1 to 1:1.

The quantity of organometallic compound (alkoxy aluminium complex or mixed aluminium/titanium complex) used in the method of the invention depends on, amongst other factors, the desired degree of cross-linking of the polyester resin and the nature of the polyester resin. Generally, from 2 to 10 per cent by weight is used and preferably the quantity is from 5 to 8 per cent by weight based on weight of resin.

Before curing the powder coating composition, the organometallic compound is thoroughly mixed with the polyester resin. Typically, the resin and organometallic compound together with other ingredients such as pigments and flow modifiers are firstly mixed as a powder in a high intensity mixer such as a Henschel mixer. Suitable pigments include inorganic pigments such as titanium dioxide and iron oxide and organic pigments such as carbon black and phthalocyanine blue. In addition inorganic extenders such as barium sulphate or calcium carbonate may be added as part of the pigmentary system. Compounds which are useful as flow modifiers include silicones and polyacrylates such as polybutyl acrylate and butyl/ethyl hexyl acrylate copolymers.

The mixed powder is usually subsequently fed to an extruder of a type conventionally used for powder coating compositions such as a Buss-Ko-Kneader PR46. The extruder forms a semi-molten mass from the mixed powder at a temperature of about 90°C to 120°C and this extrudate is cooled to form a brittle solid which is then pulverised in a suitable mill such as a pin mill, to produce a powder coating composition. Usually the powder coating composition is sieved before application to ensure the absence of oversized particles.

In use the powder coating composition is coated on to the surface to be treated in any convenient manner. For the treatment of aluminium or steel, for example, electrostatic spraying is commonly employed as this technique produces a very uniform coating even on inaccessible surfaces. An alternative technique which is extremely useful is triboelectric spraying.

The coated surface is then heated to a sufficiently high temperature to allow the resin to coalesce and cure by cross-linking the free hydroxyl or carboxyl groups in the polyester resin by means of the organometallic compound. The temperature at which the resin is cured depends to some extent upon the mobility of the cross-linking agent within the resin and the reactivity of the cross-linking agent but generally is in the range 140°C to 220°C. The resin is normally fully cured by heating at a temperature in this range for a period of between 5 and 30 minutes, more usually between 5 and 20 minutes. Typical curing schedules for carboxyl-rich polymers are 15 to 20 minutes at 160°C, 10 to 20 minutes at 180°C or 6 to 10 minutes at 200°C. For hydroxyl-rich resins typical schedules are 15 to 20 minutes at 190°C or 10 to 15 minutes at 200°C.

A number of well-known tests are used to assess the quality of the finished coating. Typically, a methyl ethyl ketone double-rub test is used to assess solvent resistance and the degree of cure and reverse impact and bend tests are used to confirm the degree of cross-linking and to assess the integrity of the coating and its bonding to the coated surfaces. Colour and gloss of the finished coatings are also important properties of the cured resin.

The coatings cured according to the method of the current invention are of acceptable quality when assessed by these tests. The organometallic compounds of the invention are active cross-linkers which are solid and have a low volatility. They produce coatings having improved curing rate and improved yellowing resistance compared to coatings employing other organometallic curing agents.

The invention is illustrated by the following examples.

### EXAMPLE 1

Aluminium triisopropoxide (87.55g, 0.43 moles) was added to triethanolamine (42.71g, 0.29 moles) in a 500 ml rotary evaporator flask. The resulting slurry was mixed for 10 minutes under nitrogen then isopropanol was removed under vacuum by heating to 150°C to yield a pale yellow friable solid (Al content 18.1%).

### EXAMPLE 2

Following the method of Example 1, aluminium triisopropoxide (68.10g, 0.33 moles) was added to triethananolamine (50.04g, 0.33 moles) and isopropanol was removed to yield a yellow solid (Al content 10.4%).

### EXAMPLE 3

Following the method of Example 1, aluminium triisopropoxide (20.45g, 0.10 moles) was added to triisopropanolamine (19.25g, 0.10 moles) and isopropanol was removed to yield a yellow solid (Al content 12.6%). **EXAMPLE 4**

Following the method of Example 1, aluminium sec-butoxide (24.92g, 0.10 moles) was added to triethanolamine (15.1g 0.10 moles) and sec-butanol was removed to yield a yellow solid (Al content 15.4%).

### EXAMPLE 5

Following a method analogous to Example 1, titanium tetraisopropoxide (42.64g, 0.15 moles), aluminium triisopropoxide (30.81g, 0.15 moles) and triethanolamine (44.71g, 0.30 moles) were combined to yield, after removal of isopropanol under vacuum, a yellow solid (Al content 6.5%, Ti content 11.4%).

### EXAMPLE 6

Following the method of Example 5, titanium tetraisopropoxide (42.59g, 0.15 moles), aluminium triisopropoxide (10.23g, 0.05 moles) and triethanolamine (29.86g, 0.20 moles) were combined to yield, after removal of isopropanol, a yellow solid (Al content 2.9%, Ti content 15.4%).

### EXAMPLE 7

Following the method of Example 5, titanium isopropoxide (28.77g, 0.10 moles), aluminium tri-sec-butoxide (24.68g, 0.10 moles), triethanolamine (29.80g, 0.20 moles) and monoethanolamine (6.12g, 0.10 moles) were combined to yield, after removal of isopropanol and secondary butanol, a yellow solid (Al content 6.0%, Ti content (10.7%)).

### EXAMPLE 8

Following the method of Example 5, titanium isopropoxide (85.19g, 0.30 moles), aluminium tri-sec-butoxide (24.76g, 0.10 moles), diethanolamine (63.46g, 0.6 moles) and monoethanolamine (18.31g, 0.3 moles) were combined to yield, after removal of isopropanol and secondary butanol, a yellow-orange solid (Al content 2.6% Ti content 13.9%).

### EXAMPLE 9

### Reactivity Test

The reactivity of the organoaluminium or mixed aluminium/titanium cross-linkers towards polyester resins can be simply checked using a gel time test. 7 parts cross-linker were ground with 93 parts polyester resin (see Table 1) with a mortar and pestle. Approximately 0.7g of this mixture was placed in a depression in a thermostatically controlled heated aluminium block. The temperature was preset to 200°C. The molten mixture was stirred with a wooden cocktail stick and the time in seconds noted for gelation (snapback of molten thread) to occur. The results are given in Table 2.

**TABLE 1**

| **RESIN** | **OH VALUE** | **ACID VALUE** | **VISCOSITY AT 165°C** |
|---|---|---|---|
| Uralac P2400 | - | 30-37 mg/KOH/g | 700 dPa.s |
| Uralac P2115 | 30-45 | 10 max mg/KOH/g | 550 dPa.s |

Resins supplied by DSM Resins

**TABLE 2**

| **RESIN** | **CROSSLINKER** | **GEL TIME /s (200°C)** |
|---|---|---|
| P2400 | Example 1 | 130 |
| P2400 | Example 2 | 150 |
| P2115 | Example 3 | 70 |
| P2400 | Example 3 | <5 |
| P2115 | Example 4 | 80 |
| P2115 | Example 5 | 75 |
| P2115 | Example 6 | 70 |
| P2400 | Example 6 | 240 |
| P2115 | Example 7 | 120 |
| P2400 | Example 7 | 140 |
| P2115 | Example 8 | 180 |

### EXAMPLE 10

### PREPARATION OF POWDER COATINGS

The use of the organo aluminium on mixed aluminium/titanium crosslinkers in a powder coating formulation (see below) was demonstrated by the following method.

Hydroxyl-rich polyester, for example Uralac P2115, or carboxyl -rich polyester resin, for example Uralac P2400, was mixed with titanium dioxide pigment, flow modifier and a crosslinker of the invention in an intensive internal mixer (Henschel) at 1800 rpm for 5 minutes. This powder was then subsequently fed to a Buss-Ko-Kneader PR46 extruder, with barrel temperature 105°C. The extrudate was pulverised using a disc pin mill (Mini-Kek) and sieved to give a maximum particle size of 75 micrometres. This powder was then electrostatically sprayed at a voltage of 90 kV to a thickness of approximately 50 micrometres on Bonderite 711 aluminium plates. These plates were then heated in an oven to 200°C for 10 minutes to facilitate cure. Solvent resistance of the cured coating was measured using MEK (methyl ethyl ketone) double rubs. Where the coating survived 200 double rubs the condition of the coating was assessed on an arbitrary scale of 1 to 5 in which 5 represents no effect of the solvent on the appearance of the coating. For colour, L, a and b values were measured and gloss at 20° and 60° was evaluated. The results are shown in Table 3.

| **Formulation** | **parts by weight** |
|---|---|
| Resin | 578.3 |
| Titanium dioxide (Tioxide R-TC4) | 375 |
| Crosslinker | 44 |
| Flowmodifier (Modaflow 3) | 9.7 |

'Modaflow' is a Trade Mark of Monsanto
'Tioxide' is a Trade Mark of Tioxide Europe Limited

**TABLE 3**

| **Crosslinker** | **Resin** | **MEK Resistance Rubs (condition)** | **Colour** | | | **Gloss** | | **Gel time of coating (s)** |
|---|---|---|---|---|---|---|---|---|
| | | | **L** | **a** | **b** | **20°** | **60°** | |
| Example 1 | P2400 | 34 | 95.67 | -1.21 | 1.05 | 22.1 | 65.4 | 160 |
| Example 2 | P2400 | 40 | 95.24 | -1.19 | 1.18 | 42.5 | 79.2 | 180 |
| Example 3 | P2400 | 200(4) | 95.37 | -1.01 | 3.61 | 6.9 | 32.6 | 160 |
| Example 3 | P2115 | 200(4) | 96.12 | -1.23 | 0.45 | 28.3 | 65.1 | 150 |
| Example 4 | P2115 | 200(4) | 96.72 | -1.21 | 1.53 | 11.4 | 39.3 | 120 |
| Example 5 | P2115 | 200(4) | 95.02 | -1.34 | 0.24 | 16.8 | 52.4 | N/A |
| Example 6 | P2115 | 200(4) | 95.64 | -1.28 | 0.61 | 11.9 | 43.9 | N/A |
| N/A = not available | | | | | | | | |

## Claims

1. A method of curing a powder coating composition comprising reacting a polyester resin with an organometallic compound characterised in that the organometallic compound is an alkoxy aluminium complex of an alkanolamine, said alkoxy aluminium complex having a ratio of alkanolamino radicals to aluminium atoms in the range 0.3:1 to 16:1.

2. A method according to claim 1 characterised in that the ratio of alkanolamino radicals to aluminium atoms is in the range 0.3:1 to 3:1.

3. A method of curing a powder coating composition comprising reacting a polyester resin with an organometallic compound characterised in that the organometallic compound is a mixed metal complex of an alkanolamine, said organometallic compound being derived from at least one aluminium alkoxide and at least titanium alkoxide and said organometallic compound having a ratio of alkanolamino radicals to the sum of aluminium and titanium atoms in the range 0.5:1 to 4:1 and an atomic ratio of aluminium to titanium of 0.3:1 to 2:1.

4. A method according to claim 3 characterised in that the mixed metal complex is prepared from a titanium tetraalkoxide derived from an alcohol having the formula ROH in which R is an alkyl radical or a radical containing one or more ether linkages and R contains up to 8 carbon atoms.

5. A method according to any one of the preceding claims characterised in that the alkoxy aluminium complex or the aluminium alkoxide is derived from an alcohol of formula ROH in which R is an alkyl radical or a radical containing one or more ether linkages and R contains up to 8 carbon atoms.

6. A method according to any one of the preceding claims characterised in that the organometallic compound contains more than one alkanolamino radical and the alkanolamino radicals present are all ethanolamino radicals or all isopropanolamino radicals.

7. A method according to any one of the preceding claims characterised in that the polyester resin is a polyester of terephthalic acid, isophthalic acid, phthalic acid, trimellitic acid, pyromellitic acid, hexahydrophthalic acid, adipic acid or sebacic acid.

8. A method according to any one of the preceding claims characterised in that the polyester resin is a polyester of 1,2-ethanediol, 1,2-propanediol, trimethylolpropane, neopentyl glycol, 1,3-butanediol, 1,4,-butanediol, pentaerythritol, glycerol, tris(hydroxyethyl) isocyanurate or ethoxylated bisphenol A.

9. A method according to any one of the preceding claims characterised in that the polyester resin is a hydroxyl-rich resin having a hydroxyl number between 20 and 150 mg KOH per gram.

10. A method according to claim 9 characterised in that the polyester resin has an acid number in the range 0 to 15 mg KOH per gram.

11. A method according to any one of claims 1 to 8 characterised in that the polyester resin is a carboxyl-rich resin having an acid number from 15 to 100 mg KOH per gram.

12. A method according to claim 11 characterised in that the polyester resin has a hydroxyl number less than 30 mg KOH per gram.

13. A method according to any one of the preceding claims characterised in that the polyester resin is a copolymer of a polyester and an acrylic polymer.

14. A method according to any one of the preceding claims characterised in that the organometallic compound is present in an amount between 2 and 10 per cent by weight based on weight of resin.

15. A method according to any one of the preceding claims characterised in that the powder coating composition is cured at a temperature in the range 140°C to 220°C.

16. A method according to claim 15 characterised in that the powder coating composition is cured by heating at a temperature in the range 140°C to 220°C for a period in the range 5 to 30 minutes.

17. A method according to any one of the preceding claims characterised in that the powder coating composition contains a pigment, an extender or a flow modifier.

18. A method according to any one of the preceding claims characterised in that the powder coating composition is coated on to a surface by means of electrostatic spraying or triboelectric spraying.
